# EUROPÄISCHE PATENTANMELDUNG

(11) **EP 3 872 725 A1**
(43) Veröffentlichungstag der Anmeldung: **01.09.2021**
(21) Anmeldenummer: 20315023.0
(22) Anmeldetag: 27.02.2020
(51) Int. Cl.: G06Q 10/08, G06Q 50/28

(54) **VERFAHREN ZUR ERMITTLUNG DES BELADUNGSZUSTANDES, SYSTEM UND TRANSPORTMANAGEMENTSYSTEM**

(71) Anmelder: Continental Automotive GmbH, 30165 Hannover (DE)
(72) Erfinder: Segesser, Carsten, 60486 Frankfurt (DE); Rollet, Benjamin, 31170 Tournefeuille (FR)
(74) Vertreter: Continental Corporation

(57) **Zusammenfassung**

Die Erfindung betrifft ein Verfahren zur Ermittlung des Beladungszustandes eines durch palettierte Güter (3) beladenen Transporters (1), wobei der Transporter (1) einen von einer Ladefläche (2), einer Vorderwand (21), einer Rückwand, mehreren Seitenwänden (5) sowie einem Dach (6) umgrenzten Laderaum (9) aufweist, wobei zumindest die Rückwand und/oder eine Seitenwand (5) zumindest teilweise als Türe (7) öffenbar ausgebildet ist oder eine Türe aufweist, zur Beladung der Ladefläche (2) mit den palettierten Gütern (3)
gekennzeichnet durch die Schritte:
- Erzeugen eines manuellen Bildes (11) des beladenen Laderaums (9), welcher mit auf Einheitspaletten (4) geladenen Gütern (3) beladen ist, so dass die geöffnete Türe und/oder ein Teil der Seitenwände zumindest teilweise in dem erzeugten Bild (11) durch eine Aufnahmeeinheit erfasst wird,
- Detektion von ersten Einheitspaletten (4) aus dem erzeugten Bild (11) und Bestimmung der nicht belegten Ladefläche (2) anhand der detektierten ersten Einheitspaletten (4), wobei
die Ermittlung der nicht belegten Ladefläche (2) unter Verwendung der Annahme erfolgt, dass die ersten Einheitspaletten (4) eine Einheitsgröße und Einheitsform aufweisen.

Ferner betrifft die Erfindung ein System und ein Transportmanagementsystem.

## Beschreibung

Die Erfindung betrifft ein Verfahren zur Ermittlung des Beladungszustandes eines durch palettierte Güter beladenen Transporters, wobei der Transporter einen von einer Ladefläche, einer Vorderwand, einer Rückwand, mehreren Seitenwänden sowie einem Dach umgrenzten Laderaum aufweist, wobei zumindest die Rückwand und/oder eine Seitenwand zumindest teilweise als Türe öffenbar ausgebildet ist oder eine Türe aufweist, zur Beladung der Ladefläche mit den palettierten Gütern. Ferner betrifft die Erfindung ein System und ein Transportmanagementsystem.

Der Ladezustand eines Transporters bzw. Anhängers, insbesondere eines Transporter-Anhängers ist den zuständigen Flottenmanagern oft unbekannt. Daher sind die Flottenmanager nicht in der Lage, zusätzliche Lasten auf Strecken zu akzeptieren, die ihre Transporter fahren.

Um den Beladungszustand eines Laderaums eines Transporters zu bestimmen, werden für gewöhnlich ein oder mehrere Sensoren im Laderaum angeordnet. Die Sensoren können als ein Kamera- und ToF-basiertes Sensorsystem ausgestaltet sein und/oder Radar-, Ultraschallsensoren umfassen. Ferner kann der Beladungszustand anhand einer Erkennung von In- und Auslaufmengen berechnet werden.

Eine solche Installation ist jedoch mit hohen Kosten verbunden. Ferner können durch mit direkt im Laderaum installierten Sensoren nicht alle Winkel abgedeckt werden.

Die EP 2178035 A1 offenbart ein Verfahren und eine Anordnung zur Leerraummessung für Lager- oder Transporträume, welche eine Grundfläche und mehrere Seitenflächen aufweisen, wobei die Grundfläche und/oder die Seitenflächen des Lager- oder Transportraums in Teilflächen eines Flächenrasters unterteilt werden, wobei gegenüber einer Teilfläche und innerhalb des Lager- oder Transportraums ein Sensor zur Abstandsmessung angeordnet ist,
wobei zur Kalibrierung je Teilfläche eine Abstandsmessung derart durchgeführt wird, dass ein Abstand zwischen dem Sensor und der zugehörigen Teilfläche ermittelt wird, wobei die so ermittelten Kalibrierungs-Messdaten aller Sensoren an eine zentrale Instanz übermittelt und von dieser als Kalibrierungsdaten gespeichert werden,
wobei zur Leerraummessung je Teilfläche eine Abstandsmessung derart durchgeführt wird, dass ein Abstand zwischen dem Sensor und der zugehörigen Teilfläche oder einem zumindest teilweise im Messbereich des Sensors befindlichen Körper ermittelt wird, und durch einen Vergleich der Messdaten mit den Kalibrierungsdaten Informationen über die Belegung des Lager- oder Transportraums erzeugt und ausgegeben werden.

Es ist daher eine Aufgabe der Erfindung Mittel anzugeben, mit welchen eine einfache Ermittlung des Beladungszustandes eines Transporters durch palettierte Güter ermöglicht wird.

Diese Aufgabe wird gelöst durch ein Verfahren mit den Merkmalen des Anspruchs 1 sowie ein System mit den Merkmalen des Anspruchs 20 und ein Transportmanagementsystem mit den Merkmalen des Anspruchs 21.

In den Unteransprüchen sind weitere vorteilhafte Maßnahmen aufgelistet, die miteinander kombiniert werden können, um weitere Vorteile zu erzielen.

Die Aufgabe wird gelöst durch ein Verfahren zur Ermittlung des Beladungszustandes eines durch palettierte Güter beladenen Transporters, wobei der Transporter
einen von einer Ladefläche, einer Vorderwand, einer Rückwand, mehreren Seitenwänden sowie einem Dach umgrenzten Laderaum aufweist, wobei zumindest die Rückwand und/oder eine Seitenwand zumindest teilweise als Türe öffenbar ausgebildet ist oder eine Türe aufweist, zur Beladung der Ladefläche mit den palettierten Gütern
umfassend der Schritte:
- Erzeugen eines manuellen Bildes des beladenen Laderaums, welcher mit auf Einheitspaletten geladenen Gütern beladen ist, so dass die geöffnete Türe und/oder ein Teil der Seitenwände zumindest teilweise in dem erzeugten Bild durch eine Aufnahmeeinheit erfasst wird,
- Detektion von ersten Einheitspaletten aus dem erzeugten Bild und Bestimmung der nicht belegten Ladefläche anhand der detektierten ersten Einheitspaletten, wobei
   die Ermittlung der nicht belegten Ladefläche unter Verwendung der Annahme erfolgt, dass die ersten Einheitspaletten eine Einheitsgröße und Einheitsform aufweisen.

Für gewöhnlich ist eine Türe eine Öffnung zum Beladen, beispielsweise eine Wagentüre, eine Türe kann aber auch eine beispielsweise flexible Plastikabdeckung/Plane sein oder eine andere öffenbare Abdeckung.

Das Bild wird vorzugsweise durch eine Kamera als Aufnahmeeinheit erzeugt. Die Kamera kann beispielsweise in einem Handy oder einer mobilen Einheit wie ein Tablet angeordnet sein, so dass die Ermittlung gleich im Handy oder der mobilen Einheit vorgenommen werden kann.

Alternativ kann das erzeugte Bild auch an eine Recheneinheit, bspw. der Recheneinheit eines Transportmanagementsystems übersandt werden, so dass dort eine Auswertung erfolgt.

Ein Transporter ist für gewöhnlich ein Truck mit Anhänger oder ein Lastkraftwagen. Durch die Erfindung haben Flottenmanager, also Manager mit mehreren Transportern, einen Einblick über die potentiell verfügbare Kapazität der einzelnen Transporter, die ansonsten oft halb leer oder sogar komplett leer sind, und können dadurch weitere Aufträge annehmen. Dies führt zu einer vermehrten Auslastung der verfügbaren Ladefläche und damit zu geringeren Kosten pro transportierter Güter. Durch die Erfindung wird dies ohne die Installation zusätzlicher Sensoren im Laderaum erzielt, wodurch hohe Kosten vermieden werden.

Die Ermittlung der nicht belegten Ladefläche erfolgt unter Verwendung der Annahme, dass die Einheitspaletten eine Einheitsgröße und -form aufweisen. Diese Einheitspaletten sind insbesondere EU- Einheitspaletten. Dadurch kann eine Detektion einer Einheitspalette vereinfacht werden und das Verfahren in vielen Transportern- auch EU-weit- angewendet werden.

Durch die Erfindung wird mithilfe eines manuellen Bildes von den geladenen Gütern die freie Ladefläche bestimmt. Dazu wird das Bild so aufgenommen, dass die Paletten und der komplette Laderaum sichtbar sind, d.h. von Außerhalb des Transporters, wobei zumindest ein Teil des Türrahmens oder die Seitenwände teilweise im Bild sichtbar sein müssen.

Dabei kann das manuelle Bild auch mit einem Auslösealgorithmus aufgenommen werden, in dem die Kamera nur dann auslöst, wenn diese eine geeignete Aufnahme, das heißt ein geeignetes Bild anhand dessen eine Auswertung möglich ist, ermittelt hat. Dies kann beispielsweise dann der Fall sein, wenn die Lichtverhältnisse bei einer Aufnahme nicht gut genug sind oder beispielsweise eine ungenügende Bildauflösung vorliegt etc.

Durch die Erfindung ist es möglich, lediglich mithilfe einer Kamera, beispielsweise einem Handy, die freie Ladefläche nach dem Beladen der vorgesehenen Gütern zu berechnen. Die berechnete freie Ladefläche kann durch ein Kommunikationsmittel an ein Transportmanagementsystem zur Verbesserung der Logistik übermittelt werden.

Vorzugsweise erfolgt die Ermittlung der nicht belegten Ladefläche unter Verwendung der Annahme, dass die geladenen Einheitspaletten im wesentlichen rechtwinkelig gegenüber der Ladefläche hervorstehen. Dadurch kann eine Erkennung der Einheitspaletten, welche vorzugsweise anhand der Detektion der Einheitspalettenkanten bewerkstelligt wird, vereinfacht erfolgen. Diese Annahme nennt man Manhatten-World Annahme.

Weiterhin vorzugsweise erfolgt die Ermittlung der ersten Einheitspaletten unter Verwendung der Information, ob eine erste Einheitspalettenkante der ersten Einheitspalette eine Seitenkante oder eine Frontkante ist. Dies kann beispielsweise standardmäßig vorgegeben werden. Alternativ kann auch ein Algorithmus diese Information berechnen.

Bevorzugt wird eine Kalibrierung der Aufnahmeeinheit unter Verwendung von, einer in der Aufnahmeeinheit angeordneten Trägheitsmessungseinheit (IMU, Inertial Measurement Unit) gelieferten Daten bei verschiedenen erzeugten Bildern, welche die Rückwand mit geschlossener Türe oder eine Seitenwand mit geschlossener Türe zeigt, bewerkstelligt, wobei die verwendete Rückwand oder die verwendete Seitenwand planar ausgebildet ist.
Dabei werden manuell beispielsweise durch verändern des Standorts der Kamera bzw. des Fahrers, welcher die Bilder erzeugt, Aufnahmen von der geschlossenen Rückwand oder Seitenwand, erzeugt. Die planare Seitenwand/Rückwand wird als Schachbrett für die Kalibrierung verwendet.

Vorzugsweise wird unter Verwendung einer Trägheitsmessungseinheit (IMU, Inertial Measurement Unit) in der Aufnahmeeinheit eine horizontale Messlinie im erzeugten Bild generiert und eine erste Region-of-Interest durch Verwendung dieser horizontalen Messlinie erzeugt. Diese erste Region-of- Interest eliminiert nicht zu dem Transporter (Ladefläche) gehörende Elemente, beispielsweise wenn das erzeugte Bild Bäume oder andere zum Umfeld gehörende Elemente aufweist, welche nicht zur Ermittlung herangezogen werden. Quasi beschneidet die erste Region-of-Interest das Bild in dem Maße, dass unwesentliche Teile herausgeschnitten werden (Umfeld) und noch der für die Ermittlung relevante Bereich zurückbleibt.

In bevorzugter Ausgestaltung erfolgt die Detektion der ersten Einheitspalette unter Verwendung eines Palettendetektionsalgorithmus.

Bevorzugt wird unter Verwendung einer Trägheitsmessungseinheit (IMU, Inertial Measurement Unit) eine horizontale Messlinie generiert. Mithilfe der horizontalen Messlinie wird eine zweite Region-of- Interest (ROI) im Bild ausgebildet, wobei der Palettendetektionsalgorithmus auf die zweite Region-of- Interest (ROI) angewendet wird. Dabei umfasst die zweite Region-of- Interest (ROI) zumindest die nicht beladene Ladefläche. Dies wird einfach umgesetzt, indem die zweite Region-of-Interest durch die untere Kante des erzeugten Bildes und die horizontale Messlinie beschränkt wird. Somit wird quasi das erzeugte Bild erneut beschnitten/eingeschränkt.

Alternativ wird in dem Bild ein Fluchtpunkt und eine zu dem Fluchtpunkt (gehörende Horizontallinie bestimmt. Unter Verwendung der Manhatten-World-Annahme existiert lediglich ein Fluchtpunkt.
Mithilfe der Horizontallinie wird eine zweite Region-of- Interest (ROI) im Bild ausgebildet und der Palettendetektionsalgorithmus auf diese zweite Region-of-Interest (ROI) angewendet. Dabei umfasst die zweite Region-of- Interest (ROI) zumindest die nicht beladene Ladefläche, das heißt diese ist im Bild zu sehen. Dies wird einfach umgesetzt, indem die zweite Region-of-Interest durch die untere Kante des erzeugten Bildes und die Horizontallinie beschränkt wird. Somit wird quasi das erzeugte Bild erneut beschnitten/eingeschränkt.

Dadurch wird der Bildabschnitt in dem der Palettendetektionsalgorithmus angewendet wird, reduziert d.h. eingeschränkt. Dadurch ist zum einen eine schnellere Auswertung möglich, zum anderen werden nur erste Einheitspaletten detektiert, welche direkt auf der Ladefläche stehen.

Bevorzugt ist der Palettendetektionsalgorithmus dazu ausgebildet, im erzeugten Bild Palettenkanten und/oder Palettenkantenabschnitte zu detektieren. Wurde eine zweite Region-of-Interest bestimmt, so ist der Palettendetektionsalgorithmus dazu ausgebildet, in der zweiten Region-of- Interest des erzeugten Bildes Palettenkanten und/oder Palettenkantenabschnitte zu detektieren.

Bevorzugt ist der Palettendetektionsalgorithmus dazu ausgebildet, die detektierten Palettenkanten und/oder Palettenkantenabschnitte mit gespeicherten verschiedenen modellierten Einheitspalettenkanten abzugleichen, wobei die modellierten Einheitspalettenkanten modellierte Umrisse der Einheitspalette unter verschiedenen Bedingungen, vorzugsweise der Blickwinkel und/oder Lichtverhältnisse und/oder Skalierung umfassen. Dabei erfolgt die Modellierung der Umrisse unter der Annahme, dass die Einheitspaletten im Wesentlichen rechtwinkelig gegenüber der Ladefläche hervorstehen. Bei einem positiven Abgleich gilt eine erste Einheitspalettenkante als erkannt.

Dadurch lassen sich die Umrisse von Einheitspaletten detektieren, insbesondere die Umrisse der ersten Einheitspaletten. Diese sind auf dem Bild sichtbar und können detektiert werden. Für den Abgleich können alle detektierten Palettenkanten und/oder Palettenkantenabschnitte herangezogen werden oder nur ein Bündel d.h. ein Teil davon. Der Abgleich erfolgt vorzugsweise mit einem Matching-Algorithmus.

In bevorzugter Ausgestaltung ist der Palettendetektionsalgorithmus dazu ausgebildet, die Palettenkanten und/oder Palettenkantenabschnitte unter Verwendung eines trainierten künstlichen Lernverfahrens zu detektieren.

Vorzugsweise werden die detektierten Palettenkanten und/oder Palettenkantenabschnitte aus vorangegangenen erzeugten Bildern als Trainingsdaten herangezogen. Dadurch ist es einfach möglich, ein künstliches Lernverfahren zu trainieren unter Verwendung von hochqualitativen Trainingsdaten. Weiterhin vorzugsweise ist das trainierte künstliche Lernverfahren ein künstliches neuronales Netz oder ein Deep Lerning Verfahren.

In weiterer bevorzugter Ausgestaltung erfolgt die Berechnung des Abstandes der ersten Einheitspalettenkante der detektierten ersten Einheitspalette zu der Aufnahmeeinheit unter Verwendung der Annahme, dass die geladenen ersten Einheitspaletten im wesentlichen rechtwinkelig gegenüber der Ladefläche hervorstehen. Ferner wird zur Berechnung der Fluchtpunkt herangezogen, wobei aufgrund der Manhatten-World-Annahme lediglich einer existiert. Mittels dieser Manhatten-World Annahme und der bekannten Maße der Einheitspalette ist eine solche Abstandsberechnung einfach möglich.

Ferner wird in dem Bild ein Fluchtpunkt bestimmt, wobei die Berechnung des Abstandes der Aufnahmeeinheit zu der Rückwand oder der Seitenwand in dem erzeugten Bild unter Verwendung des Fluchtpunktes erfolgt.

Unter Verwendung der beiden Abstände kann die nicht belegte Ladefläche berechnet werden.

Vorzugsweise wird die Anzahl der noch möglichen zu ladenden Einheitspaletten mittels eines auf die nicht belegte Ladefläche projizierten Gitternetzes ermittelt. Anhand einer Gitterprojektion, welche auf die freie Ladefläche projiziert wird, kann ermittelt werden, wieviel Einheitspaletten noch geladen werden können.

Vorzugsweise wird unter Verwendung einer Trägheitsmessungseinheit (IMU, Inertial Measurement Unit) eine horizontale Messlinie generiert, und eine Orthorektifizierung und/oder Entzerrung des erzeugten Bildes unter Verwendung der detektierten Seitenwände des Transporters und der horizontalen Messlinie durchgeführt. Anschließend wird der Palettendetektionsalgorithmus auf das orthorektifizierte und/oder verzerrungsfreie Bild angewendet.
Damit können Fehler bei der Aufnahme (beispielsweise wenn unter einem schrägen Winkel das Bild erzeugt worden ist) korrigiert werden.

Vorzugsweise wird der Wert derjenigen ermittelten Ladefläche, welche nicht durch Einheitspaletten belegt ist, und die Anzahl der potentiell aufnehmbaren Einheitspaletten an ein Transportmanagementsystem durch ein Kommunikationsmittel übermittelt. Dadurch können neue Aufträge angenommen werden und die Ladungskapazität angepasst werden.

Vorzugsweise wird zusätzlich das Gewicht der geladenen palettierten Güter ermittelt und zur Ermittlung des Beladungszustandes miteinbezogen.

Ferner wird die Aufgabe gelöst durch ein System aufweisend eine Kamera zum Erzeugen eines manuellen Bildes von einem, mit auf Einheitspaletten angeordneten Gütern beladenen Laderaum eines Transporters , wobei der Laderaum von einer Ladefläche, einer Vorderwand, einer Rückwand, Seitenwänden sowie einem Dach umgrenzt ist, wobei zumindest die Rückwand und/oder eine Seitenwand zumindest teilweise als Türe offenbar ausgebildet ist oder in der Rückwand und/oder in der Seitenwand eine Türe angeordnet ist, zur Beladung der Ladefläche mit den palettierten Gütern.

Dabei ist eine Auswerteeinheit vorgesehen, zur Auswertung eines manuellen Bildes des beladenen Laderaums, welches mit auf Einheitspaletten geladene Güter zeigt, so dass die geöffnete Türe und/oder ein Teil der Seitenwände zumindest teilweise in dem erzeugten Bild erfasst sind, und wobei die Auswerteeinheit zur Detektion von ersten Einheitspaletten aus dem erzeugten Bild und Bestimmung der nicht belegten Ladefläche anhand der detektierten ersten Einheitspaletten eingerichtet ist und wobei die Auswerteeinheit ferner zur Bestimmung der nicht belegten Ladefläche unter Verwendung der Annahme, dass die ersten Einheitspaletten eine Einheitsgröße und Einheitsform aufweisen, eingerichtet ist.

Insbesondere kann das System als mobile Einheit, beispielsweise ein Handy oder ein Tablet ausgebildet sein.
Die Vorteile des Verfahrens können auch auf das erfindungsgemäße System übertragen werden.

Bevorzugt weist das System ein Kommunikationsmittel zum Übermitteln des Wertes der Ladefläche, welche nicht durch Einheitspaletten belegt ist, an ein Transportmanagementsystem auf.

Weiterhin wird die Aufgabe gelöst durch ein Transportmanagementsystem zur Steuerung eines oder mehrerer Transporter unter Verwendung eines wie oben beschriebenen Verfahrens.

Durch die Erfindung wird eine Erhöhung der Kapazitätsauslastung eines Transporters mit einfachen Mitteln bewirkt. Die nicht genutzte Ladekapazität kann durch eine einfache Bildaufnahme und eine Auswertung des Bildes berechnet werden.

Weitere Eigenschaften und Vorteile der vorliegenden Erfindung ergeben sich aus der nachfolgenden Beschreibung unter Bezugnahme auf die beiliegenden Figuren. Darin zeigen schematisch:
FIG 1: einen Transporter mit einer Ladefläche zum Transportieren von Gütern auf Einheitspaletten,
FIG 2: genormte Einheitspaletten in Seitenansicht und Vorderansicht,
FIG 3: die Manhatten -Welt Annahme anhand der Einheitspaletten,
FIG 4: eine Aufnahme des Laderaums vom Laderaum selber heraus,
FIG 5: eine Aufnahme des Laderaums mit Dach,
FIG 6: eine Verzeichnungskorrektur und Orthorektifizierung/Verkippung,
FIG 7: eine Modellierung von Einheitspalettenkanten einer Einheitspalette,
FIG 8: eine Ermittlung einer zweiten Region-of-Interest,
FIG 9: die Ermittlung der nicht durch palettierte Güter beladene Ladefläche schematisch,
FIG 10: ein Transporter und Transportmanagementsystem,
FIG 11: das Transportmanagementsystem im Detail.

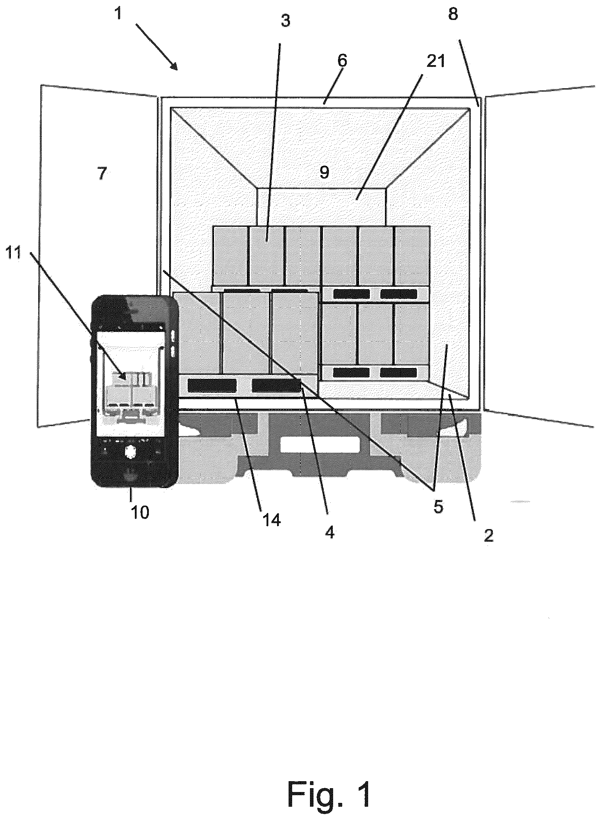

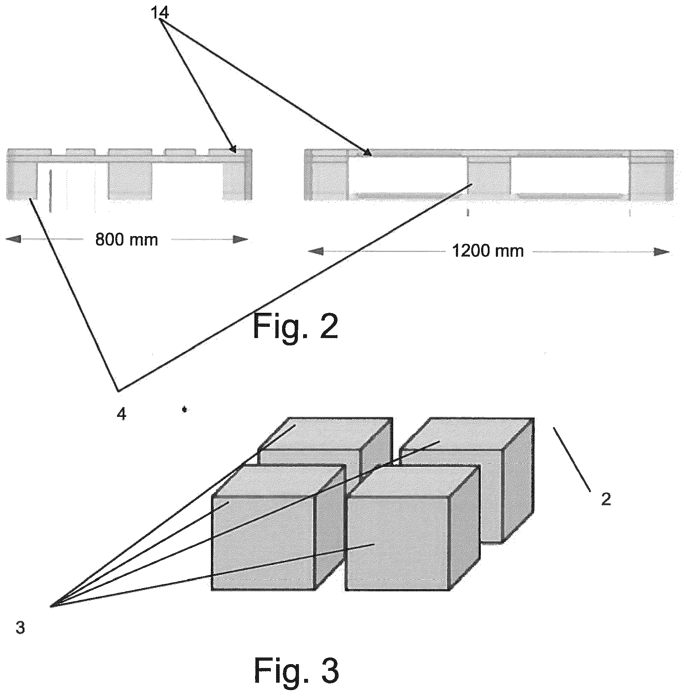

FIG 1 zeigt einen Transporter 1 mit einer Ladefläche 2 auf der Güter 3 auf Einheitspaletten 4 geladen sind. Dabei sind die Einheitspaletten 4 genormt und weisen eine Einheitsgröße auf. Die Einheitspaletten 4 sind typischerweise nach EN 13698-1 genormte, mehrwegfähige EU-Transportpaletten. FIG 2 zeigt eine genormte Einheitspalette 4 in Seitenansicht und Vorderansicht. Diese Einheitspaletten 4 werden auch Europaletten genannt.

Der Transporter 1 weist Seitenwände 5, eine Vorderwand 21 und ein Dach 6 auf. Der Transporter 1 ist hier zur heckseitigen Beladung ausgebildet, indem eine Rückwand als eine Tür 7 mit einem Türrahmen 8 ausgebildet ist. Die Seitenwand 5, das Dach 6 und die Türe 7 sowie die Ladefläche 2 bilden einen Laderaum 9 aus.

Vorzugsweise ist der Türrahmen 8 rechtwinkelig und der Laderaum 9 quaderförmig ausgebildet.

Die Güter 3 sind auf der Einheitspalette 4 in dem Laderaum 9 auf der Ladefläche 2 geladen.

Zur Erkennung des freien Laderaums 9 wird zunächst ein Bild 11, vorzugsweise ein Foto von dem beladenen Transporter 1 mittels einer Kamera gemacht.

Dabei kann das Bild 11 manuell erstellt werden. Alternativ kann auch die Kamera dazu ausgebildet sein, aus verschiedenen Blickwinkeln erst dann ein Bild 11 zu erstellen, wenn die Kamera das Bild 11 als ausreichend genau erkannt hat. Dazu nimmt der Fahrer entweder ein Video auf und die Kamera entscheidet selbstständig, welches Bild 11 für die Verwertung herangezogen wird, oder die Kamera löst erst dann aus, wenn die Einstellungen hinreichend genau sind.

Vorzugsweise ist diese Kamera in einer mobilen Einheit, wie bspw. einem Tablet oder einem Handy 10 angeordnet. Dabei weist das Tablet oder das Handy 10 eine inertiale Messeinheit (IMU), welche mit der Kamera verbunden ist, oder die Kamera selber eine inertiale Messeinheit (IMU) auf.

Eine solche inertiale Messeinheit (IMU) weist Beschleunigungs- und Drehratensensoren mit denen Lageänderungen berechnet werden, auf. Eine IMU kann beispielsweise Linearbeschleunigungen und/oder Winkelbewegungen messen und eine Grobausrichtung des Bildes 11 bewirken, beispielsweise bei starker Verdrehung der Kamera in einem automatisierten Aufnahmemodus.

Die Kamera nimmt den Laderaum 9 mit den palettierten Gütern 3 auf. Vorzugsweise wird ferner die Kamera anhand einer Aufnahme einer geschlossenen Ansicht der Türe 7 des Transporters 1 unter Verwendung der IMU der Kamera kalibriert. Die verwendete Rückwand oder verwendete Seitenwand ist planar ausgebildet. Dadurch kann die verwendete Rückwand oder verwendete Seitenwand quasi als Schachbrett verwendet werden, anhand dessen eine Kalibrierung möglich ist. Zur Kalibrierung werden verschiedene Bilder unter verschiedenen Winkeln erzeugt, welche anhand der IMU bekannt sind. Dadurch lässt sich eine Kalibrierung leicht bewerkstelligen.

Die Ermittlung der nicht belegten Ladefläche 2 erfolgt unter Verwendung der Annahme, dass die geladenen Einheitspaletten 4 im wesentlichen rechtwinkelig gegenüber der Ladefläche 2 hervorstehen. Diese Annahme wird als Manhattan -Welt Annahme bezeichnet (Manhattan World Assumption).

Der Grundgedanke dieser Annahme besteht darin, dass die Einheitspaletten 4, wie im allgemeinen menschengemachte Objekte, häufig rechtwinkelig aus einer Ebene herausstehen. Dadurch kann eine Erkennung der ersten Einheitspaletten 4, welche - wie nachfolgend noch ausgeführt wird- anhand der Detektion von ersten Einheitspalettenkanten 14 erfolgen, da die ersten Einheitspalettenkanten 14 einfacher im erzeugten Bild 11 detektiert werden können.

FIG 3 zeigt die Manhatten -Welt Annahme (Manhatten World Assumption) anhand eines einfachen Modells.

Zur Ermittlung der freien Ladefläche 2 wird mit der Kamera eine Aufnahme von dem geöffneten Laderaum 9 mit den palettierten Gütern 3 auf der Ladefläche 2 getätigt.

Hierbei wurde erkannt, dass die Aufnahme nicht vom Innenraum des Transporters 1, d.h. des Laderaums 9 selber heraus getätigt werden kann, da hierbei die Ladefläche 2 nicht vollständig auf der Aufnahme, d.h. im Bild 11 zu sehen sein könnte.
Zur Ermittlung der freien Ladefläche 2 muss diese mit den geladenen palettierten Gütern 3 im Bild 11 erfasst sein.

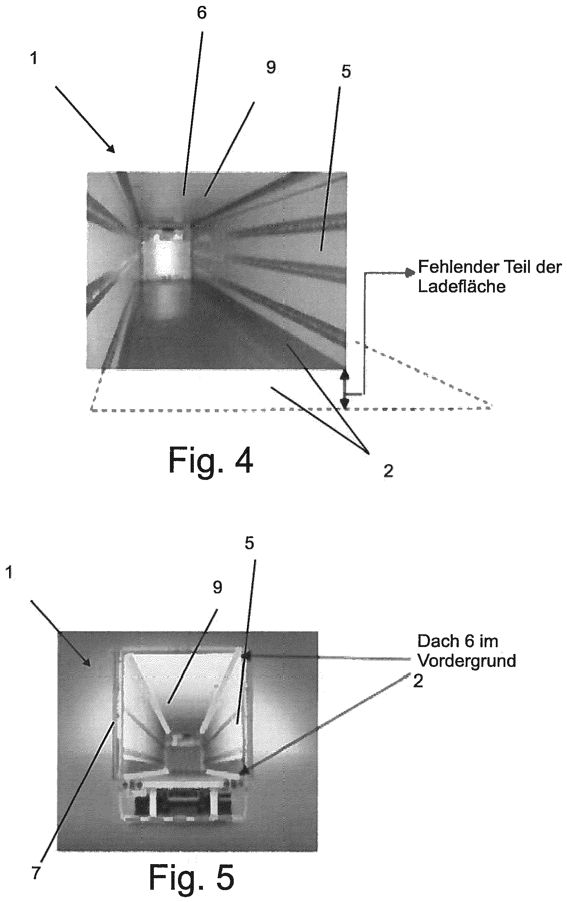

FIG 4 zeigt eine Aufnahme des Laderaums 9 von Laderaum 9 selber heraus. Hierbei ist ersichtlich, dass zum Teil die Ladefläche 2 nicht im Bild 11 erfasst ist. Ebenfalls wurde erkannt, dass bei einer fehlerhaften Aufnahme von einem Außenraum die Ladefläche 2 nicht deutlich genug zu erkennen ist.

FIG 5 zeigt eine solche Aufnahme. Hierbei ist zu erkennen, dass das Dach 6 mehr im Vordergrund ist, so dass ein Erkennen der freien Ladefläche 2 nur schwer zu bewerkstelligen ist.

Es wurde erkannt, dass die manuelle Erzeugung des Bildes 11 von außen mit sichtbarer Ladefläche 2 erfolgen sollte.

Da nach dem Beladen des Transporters 1 mit der Kamera ein Bild 11, das heißt ein Foto gemacht wird, um die Einhaltung der Ladungssicherung nachzuweisen, kann dieses Bild 11 zur Ermittlung der freien Ladefläche 2 verwendet werden. Somit ist kein weiterer Prozessschritt mehr erforderlich. Vorzugsweise wird das Bild 11 von dem Fahrer des Transporters 1 aufgenommen. Alternativ kann mit einem in der Kamera integrierten Algorithmus die ideale Einstellung ermittelt werden.

Vorteilshafterweise wird daher das Bild 11 so aufgenommen, dass der Türrahmen 8 vollständig zu erkennen ist, und die Aufnahme möglichst keinen Winkelverzug oder Höhenunterschiede aufweist. Dies ist in dem Falle des geöffneten Transporters 1 in FIG 1 gegeben. Zur Optimierung können Bildoptimierungsalgorithmen verwendet werden, welche in der Kamera beispielsweise in der IMU enthalten sind.

Bei Transportern 1, welche seitlich eine Türe zum seitlichen Beladen aufweisen, wird das Bild 11 manuell von der Seite aufgenommen. Ebenfalls kann ein solches Bild 11 herangezogen werden, um die Einhaltung der Ladungssicherung nachzuweisen.

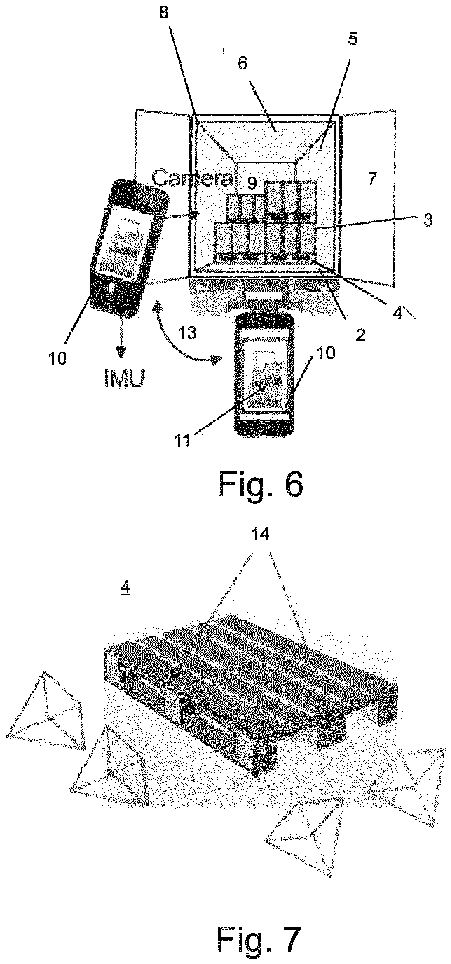

Ist das manuelle Bild verkippt 13 und/ oder verzerrt (FIG 6), so werden vorzugsweise eine Orthorektifizierung und Verzeichnungskorrektur auf das verzerrte 13 Bild angewendet.

FIG 6 zeigt eine solche Verzeichnungskorrektur und Orthorektifizierung.

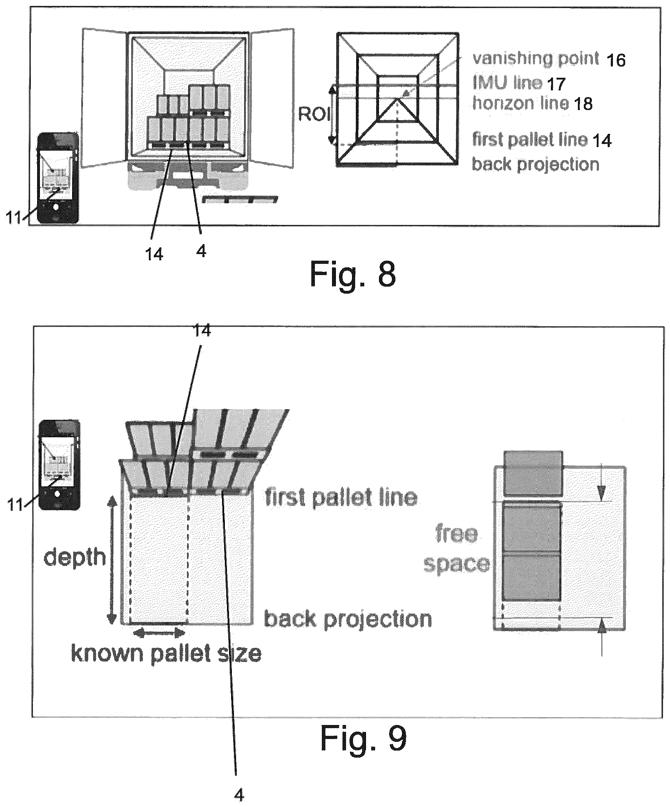

Wird eine Orthorektifizierung, d. h. eine Kompensation für eine Verkippung/Verzerrung 13 des aufgenommenen Bildes 11 durchgeführt, so kann ein orthorektifiziertes Bild erhalten werden. Dazu werden für die Orthorektifizierung die parallel zueinander angeordneten Seitenwände des Transporters 1 herangezogen, welche im aufgenommenen verzerrten 13 Bild 11 detektiert worden sind sowie eine durch die Trägheitsmessungseinheit (IMU, Inertial Measurement Unit) generierte horizontale Messlinie 17 (FIG 8). Somit kann eine optimierte Ansicht als Bild 11 des beladenen Laderaumes 9 erzeugt bzw. diese Informationen zur Weiterverarbeitung verwendet werden.

Mittels der Seitenwände des Transporters 1 kann ebenfalls ein Fluchtpunkt 16 (FIG 8) bestimmt werden, so dass eine Orthorektifizierung oder Verzeichnungskorrektur (distortion correction) mittels des Fluchtpunktes 16 und der IMU vorgenommen werden kann.

Anhand der IMU und des Fluchtpunktes 16 (FIG 8) kann somit eine Verzeichnungskorrektur (distortion correction) und Orthorektifizierung vorgenommen werden, so dass eine Korrektur des aufgenommenen Bildes 11 durchgeführt wird. Dadurch ist es möglich für die weitere Berechnung ein verkipptes/entzerrtes Bild 11 zu verwenden bzw. die Verkippung bei Weiterverarbeitung des Bildes 11 zu berücksichtigen.

Unter Verwendung der Trägheitsmessungseinheit (IMU, Inertial Measurement Unit) und der damit generierten horizontalen Messlinie 17 im erzeugten Bild 11 wird eine erste Region-of-Interest (ROI) durch Verwendung dieser horizontalen Messlinie 17 ausgebildet. Durch diese wird das erzeugte Bild 11 quasi zugeschnitten bzw. werden alle nicht relevanten Informationen, wie Umfeldinformationen (Baum, anderer Truck) eliminiert.

Die Ermittlung von nicht durch Einheitspaletten 4 belegter Ladefläche 2 wird mittels einer Detektion der ersten Einheitspaletten 4 in dem erzeugten und ggf. korrigierten Bild 11 vorgenommen, wobei die Detektion einer ersten Einheitspalette 4 anhand einer Detektion der ersten Einheitspalettenkanten 14 der ersten Einheitspalette 4 erfolgt.
Zur Detektion der ersten Einheitspalettenkanten 14 wird ein Palettendetektionsalgorithmus verwendet, welcher in FIG 7 genauer aufgezeigt wird.

Der Palettendetektionsalgorithmus ist dazu ausgebildet, im erzeugten Bild 11 Palettenkantenabschnitte und/oder Palettenkanten zu detektieren.

Palettenkantenabschnitte können ganze Palettenkanten oder Teile einer Palettenkante sein, wobei die Palettenkanten die horizontalen oder vertikalen Kanten der Einheitspalette 4 sind.

Zumindest ein Teil der detektierten Palettenkantenabschnitte/ Palettenkanten wird nun mit vorab modellierten Einheitspalettenkanten in Übereinstimmung gebracht, beispielsweise mit einem matching Algorithmus.

Dazu werden vorab verschiedene Einheitspalettenkanten 14 unter verschiedenen Bedingungen modelliert. Die Bedingungen sind beispielsweise verschiedene Aufnahmewinkel, verschiedene Abstände (Skalierungen), sowie verschiedene Lichtverhältnisse. Auch andere Bedingungen sind möglich.

Ferner werden die verschiedenen Einheitspalettenkanten 14 der Einheitspaletten 4 unter Berücksichtigung der Manhatten-World Annahme modelliert.

Dabei bedeutet Manhatten-World-Assumption, dass die Modellierung unter der Annahme erfolgt, dass die geladenen Einheitspaletten 4 im wesentlichen rechtwinkelig gegenüber der Ladefläche 2 hervorstehen (Manhatten-World-Assumption).

Diese verschiedenen Modelle werden gespeichert, beispielsweise in einer Datenbank.

Die gespeicherten Modelle werden nun herangezogen, um erste Einheitspaletten 4 das heißt erste Einheitspalettenkanten 14 von ersten Einheitspaletten 4 zu detektieren.

Dazu werden die detektierten Palettenkantenabschnitte/Palettenkanten zumindest teilweise oder ein Bündel daraus mit den modellierten Einheitspalettenkanten 14 gemachted, d. h. in Übereinstimmung gebracht. Ist eine solche Übereinstimmung erkannt gilt die erste Einheitspalette 4 bzw. deren Einheitspalettenkante 14 als erkannt.

Dabei sind die ersten Einheitspaletten 4 (FIG 8) diejenigen Einheitspaletten, die quasi als letztes geladen wurden, und von der Kamera aus sichtbar sind.

Die Detektion der ersten Einheitspalettenkanten 14 (FIG 8) der ersten Einheitspalette 4 (FIG 8) mithilfe des Palettendetektionsalgorithmus kann in einer zweiten Region-of-Interest ROI (FIG 8) erfolgen.

FIG 8 zeigt die Ermittlung einer solchen zweiten Region-of- Interest ROI in einer dazu schematischen Darstellung.

Dabei wird unter Verwendung der Trägheitsmessungseinheit bzw. IMU (IMU = Inertial Measurement Unit), die in der Kamera untergebracht ist oder mit der Kamera in Verbindung steht, eine IMU-Messlinie (horizontale Messlinie,17) generiert, wobei mithilfe der horizontalen Messlinie 17 die zweite Region-of-Interest (ROI) im Bild 11 ausgebildet wird. Die zweite Region of Interest entspricht dem Bereich zwischen der unteren Bildkante und der horizontalen Messlinie 17. Dadurch ist die nicht belegte Ladefläche 2 ersichtlich als auch die erste Einheitspalette 4.

Alternativ kann in dem Bild 11 ein Fluchtpunkt 16 und eine zu dem Fluchtpunkt 16 gehörende Horizontallinie 18 berechnet werden, welche die zweite Region-of-Interest (ROI) begrenzt. Der Fluchtpunkt 16 liegt auf der Horizontallinie 18. Die zweite Region of Interest entspricht dem Bereich zwischen der unteren Bildkante und der Horizontallinie 18. Dadurch ist die nicht belegte Ladefläche 2 ersichtlich als auch die erste Einheitspalette 4.

Vorzugsweise wird nun der Palettendetektionsalgorithmus zur Detektion erster Einheitspalettenkanten 14 erster geladener Einheitspaletten 4 in der zweiten Region-of-Interest ROI herangezogen. Dadurch können die ersten Einheitspalettenkanten 14 schneller detektiert werden, da nun das Bild 11 weiter begrenzt wurde.

FIG 9 zeigt die Ermittlung der nicht durch palettierte Güter beladene Ladefläche 2 schematisch. Die Berechnung der freien Ladefläche 2 erfolgt durch die Berechnung des Abstandes der detektierten ersten Einheitspalettenkante 14 der detektierten ersten Einheitspalette 4 zu der Aufnahmeeinheit unter Verwendung der Annahme, dass die geladenen ersten Einheitspaletten 4 im wesentlichen rechtwinkelig gegenüber der Ladefläche 2 hervorstehen und die Berechnung des Abstandes der Aufnahmeeinheit zu der Rückwand in dem erzeugten Bild 11 unter Verwendung des Fluchtpunktes 16.

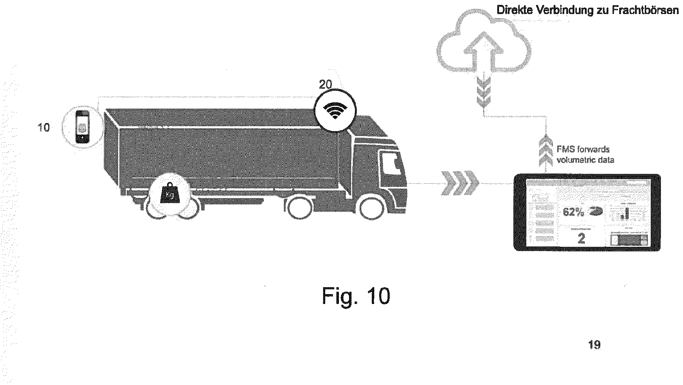

Anhand einer Gitterprojektion, welche auf die freie Ladefläche projiziert wird, kann ermittelt werden, wieviel Einheitspaletten 4 noch geladen werden können.
Diese Anzahl kann nun an ein Transportmanagementsystem 19 (FIG 10) übermittelt werden.

In diesem Fall können noch zwei Einheitspaletten 4 auf der Ladefläche 2 aufgenommen werden.

Diese Information kann anschließend, wie in FIG 10 gezeigt, von dem Handy 10 direkt oder über eine Transportertelematikeinheit 20 an ein Transportmanagementsystem 19 weitergeleitet werden. Durch die zusätzliche Information über die freie Ladefläche 2 kann ein effizientes Logistikmanagement gewährleistet werden.

Die Ermittlung von ungenutzter Ladefläche 2 kann zur Optimierung grundlegender Logistikmanagementaufgaben, An- und Ablehnung von Aufträgen und zur Optimierung der Lagerhaltung verwendet werden. Ferner kann zur Ermittlung der freien Ladekapazität noch das Gewicht der palettierten Güter 3 ermittelt werden und an das Transportmanagementsystem 19 weitergeleitet werden.

Die Reduzierung der Leerfahrten für Transporter 1 und die bessere Auslastung der Kapazitäten führen zu weniger unnötigen Fahrten mit weniger CO2 pro transportiertem Gut. Gerade in Zeiten des steigenden Bewusstseins für den Klimawandel ist dies ein großer Vorteil.

Insbesondere kann diese Information ohne technische Zusatzausstattung wie Sensoren gewonnen werden. Es muss daher keine zusätzliche Hardware gekauft, installiert, geliefert oder gewartet werden.

Die Informationen über den Ladungszustand des Transporters 1 werden durch dieselben Bilder 11 gewonnen, die zum Nachweis der Einhaltung der Ladungssicherung aufgenommen werden. Dadurch müssen keine zusätzlichen Prozessschritte durchgeführt werden, was die Arbeitsabläufe für die Transporter -Fahrer vereinfacht und Zeit spart.

Zudem muss kein weiterer technischer Aufwand betrieben werden; es wird nur ein Bild 11 benötigt, um die Tiefe abzuschätzen und daraus die freie Ladefläche 2 zu berechnen. Dabei kann jede beliebige Kamera verwendet werden.

Ferner kann das Transportmanagementsystem 19 vorzugsweise die Informationen über zur Verfügung stehenden Laderaum 9 an eine Frachtenbörse übermitteln (Cloud Service). Diese kann auf einer Plattform ausgebildet sein. Auf der Frachtenbörse werden Frachtaufträge, gegebenenfalls unter Veröffentlichung, angeboten. Diese können dann von einem Versender abgerufen werden.

Auch können Versender ihre zu vergebenden Güter auf der Frachtenbörse anbieten. Anzugeben sind Anzahl, Größe und Gewicht der Frachtstücke, Gefahrgutklassen, Frachttermine.

Dadurch kann das Transportmanagementsystem 19 Aufträge unter Verwendung von Informationen aus der Gruppe Orts- und Zeitangaben zur Herstellung und/oder Verpackung zu den Gütern annehmen oder ablehnen oder diese Informationen auf der Frachtenbörse zur Verfügung stellen.

Ferner kann das Transportmanagementsystem 19 Aufträge unter Verwendung weiterer Informationen über spezielle Bedingungen wie Informationen aus der Gruppe Abfall und/oder Gefahrgut und/oder Frischware annehmen oder ablehnen oder diese Informationen auf der Frachtenbörse zur Verfügung stellen.

Werden während des Abfahrens der Route neue Aufträge angenommen, beispielsweise in dem auf der Frachtenbörse von einem Versender freie Ladefläche 2 gekauft wird, so erfolgt eine Änderung von bestehenden Aufträgen. In diesem Fall ist das Transportmanagementsystem 19 dazu ausgelegt, anhand des angenommenen Auftrags eine Routenplanung dynamisch anzupassen.

Durch die zusätzliche Information über freie Ladefläche 2 kann ein effizientes Logistikmanagement durchgeführt werden. Die Ermittlung von ungenutzter Ladefläche 2 kann zur Optimierung grundlegender Logistikmanagementaufgaben, An- und Ablehnung von Aufträgen und zur Optimierung der Lagerhaltung verwendet werden.

Ferner kann vereinfacht ein Histogramm der Transporterauslastung, eine Nachverfolgung und Berichterstattung erstellt werden sowie das Bild 11 als Foto zur Einhaltung der Ladungssicherung verwendet werden.

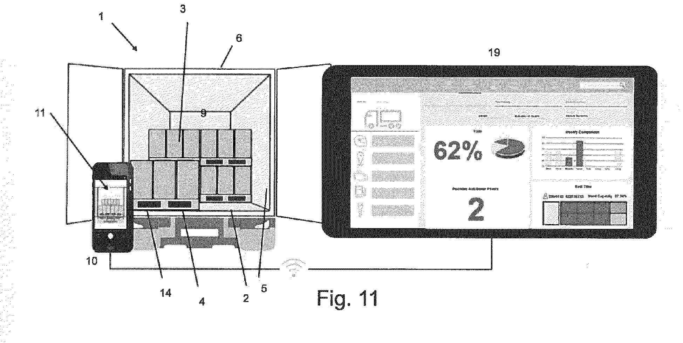

FIG 11 zeigt eine Anzeige des Transportmanagementsystems 19 mit der Anzeige wo und wieviel freie Ladefläche 2 sich in dem Transporter 1 befindet.

Durch die Erfindung kann eine Reduzierung der Leerfahrten für Transporter 1 (FIG 2) und eine bessere Auslastung von Kapazitäten erzielt werden.

## Patentansprüche

1. Verfahren zur Ermittlung des Beladungszustandes eines durch palettierte Güter (3) beladenen Transporters (1), wobei der Transporter (1)
einen von einer Ladefläche (2), einer Vorderwand (21), einer Rückwand, mehreren Seitenwänden (5) sowie einem Dach (6) umgrenzten Laderaum (9) aufweist, wobei zumindest die Rückwand und/oder eine Seitenwand (5) zumindest teilweise als Türe (7) öffenbar ausgebildet ist oder eine Türe aufweist, zur Beladung der Ladefläche (2) mit den palettierten Gütern (3)
**gekennzeichnet durch** die Schritte:
- Erzeugen eines manuellen Bildes (11) des beladenen Laderaums (9), welcher mit auf Einheitspaletten (4) geladenen Gütern (3) beladen ist, so dass die geöffnete Türe und/oder ein Teil der Seitenwände zumindest teilweise in dem erzeugten Bild (11) durch eine Aufnahmeeinheit erfasst wird,
- Detektion von ersten Einheitspaletten (4) aus dem erzeugten Bild (11) und Bestimmung der nicht belegten Ladefläche (2) anhand der detektierten ersten Einheitspaletten (4), wobei
die Ermittlung der nicht belegten Ladefläche (2) unter Verwendung der Annahme erfolgt, dass die ersten Einheitspaletten (4) eine Einheitsgröße und Einheitsform aufweisen.

2. Verfahren nach Anspruch 1, **dadurch gekennzeichnet, dass** die Ermittlung der ersten Einheitspaletten (4) unter Verwendung der Annahme erfolgt, dass die geladenen ersten Einheitspaletten (4) im wesentlichen rechtwinkelig gegenüber der Ladefläche (2) hervorstehen.

3. Verfahren nach einem der vorhergehenden Ansprüche, **dadurch gekennzeichnet, dass** die Ermittlung der ersten Einheitspaletten (4) unter Verwendung der Information erfolgt, ob eine erste Einheitspalettenkante (14) der ersten Einheitspalette (4) eine Seitenkante oder eine Frontkante ist.

4. Verfahren nach einem der vorhergehenden Ansprüche, **dadurch gekennzeichnet, dass**
eine Kalibrierung der Aufnahmeeinheit unter Verwendung von, einer in der Aufnahmeeinheit angeordneten Trägheitsmessungseinheit (IMU, Inertial Measurement Unit) gelieferten Daten bei verschiedenen erzeugten Bildern (11), welche die Rückwand mit geschlossener Türe (7) oder eine Seitenwand mit geschlossener Türe zeigt, bewerkstelligt wird, wobei die verwendete Rückwand oder verwendete Seitenwand planar ausgebildet ist.

5. Verfahren nach einem der vorhergehenden Ansprüche, **dadurch gekennzeichnet, dass**
unter Verwendung einer Trägheitsmessungseinheit (IMU, Inertial Measurement Unit) in der Aufnahmeeinheit eine horizontale Messlinie (17) im erzeugten Bild (11) generiert wird und eine erste Region-of-Interest durch Verwendung dieser horizontalen Messlinie (17) erzeugt wird.

6. Verfahren nach einem der vorhergehenden Ansprüche, **dadurch gekennzeichnet, dass**
die Detektion der ersten Einheitspalette (4) unter Verwendung eines Palettendetektionsalgorithmus erfolgt.

7. Verfahren nach Anspruch 6, **dadurch gekennzeichnet, dass**
unter Verwendung einer Trägheitsmessungseinheit (IMU, Inertial Measurement Unit) eine horizontale Messlinie (17) generiert wird, wobei mithilfe der horizontalen Messlinie (17) eine zweite Region-of- Interest (ROI) im Bild (11) ausgebildet wird und wobei der Palettendetektionsalgorithmus auf die zweite Region-of- Interest (ROI) angewendet wird, wobei die zweite Region-of- Interest (ROI) zumindest die nicht beladene Ladefläche (2) umfasst.

8. Verfahren nach Anspruch 6, **dadurch gekennzeichnet, dass**
in dem Bild (11) ein Fluchtpunkt (16) und eine zu dem Fluchtpunkt (16) gehörende Horizontallinie (18) bestimmt wird, und wobei mithilfe der Horizontallinie (18) eine zweite Region-of- Interest (ROI) im Bild (11) ausgebildet wird und wobei der Palettendetektionsalgorithmus auf die zweite Region-of- Interest (ROI) angewendet wird, und wobei die zweite Region-of- Interest (ROI) zumindest die nicht beladene Ladefläche (2) umfasst.

9. Verfahren nach einem der vorhergehenden Ansprüche 6 bis 8, **dadurch gekennzeichnet, dass** der Palettendetektionsalgorithmus dazu ausgebildet ist, im erzeugten Bild (11) Palettenkanten und/oder Palettenkantenabschnitte zu detektieren.

10. Verfahren nach Anspruch 9, **dadurch gekennzeichnet, dass**
der Palettendetektionsalgorithmus dazu ausgebildet ist, die detektierten Palettenkanten und/oder Palettenkantenabschnitte mit gespeicherten verschieden modellierten Einheitspalettenkanten (14) abzugleichen, wobei die modellierten Einheitspalettenkanten (14) modellierte Umrisse der Einheitspalette (4) unter verschiedenen Bedingungen umfassen, wobei die Modellierung der Umrisse unter der Annahme erfolgt, dass die Einheitspaletten (4) im Wesentlichen rechtwinkelig gegenüber der Ladefläche (2) hervorstehen und wobei bei einem positiven Abgleich eine erste Einheitspalette (4) als erkannt gilt.

11. Verfahren nach Anspruch 10, **dadurch gekennzeichnet, dass** die Bedingungen zumindest einen Blickwinkel und/oder Lichtverhältnisse und/oder Skalierung umfassen.

12. Verfahren nach Anspruch 9, **dadurch gekennzeichnet, dass**
der Palettendetektionsalgorithmus dazu ausgebildet ist, die Palettenkanten und/oder Palettenkantenabschnitte unter Verwendung eines trainierten künstlichen Lernverfahrens zu detektieren.

13. Verfahren nach Anspruch 12, **dadurch gekennzeichnet, dass** detektierte Palettenkanten und/oder Palettenkantenabschnitte aus vorangegangenen erzeugten Bildern (11) als Trainingsdaten herangezogen werden.

14. Verfahren nach einem der vorhergehenden Ansprüche, **dadurch gekennzeichnet, dass** die Berechnung des Abstandes der ersten Einheitspalettenkante (14) der detektierten ersten Einheitspalette (4) zu der Aufnahmeeinheit unter Verwendung der Annahme erfolgt, dass die geladenen ersten Einheitspaletten (4) im wesentlichen rechtwinkelig gegenüber der Ladefläche (2) hervorstehen.

15. Verfahren nach einem der vorhergehenden Ansprüche, **dadurch gekennzeichnet, dass** in dem Bild (11) ein Fluchtpunkt (16) bestimmt wird, wobei die Berechnung des Abstandes der Aufnahmeeinheit zu der Rückwand oder der Seitenwand (5) in dem erzeugten Bild (11) unter Verwendung des Fluchtpunktes (16) erfolgt.

16. Verfahren nach einem der vorhergehenden Ansprüche, **dadurch gekennzeichnet, dass** die Anzahl der noch möglichen zu ladenden Einheitspaletten (4) mittels eines auf die nicht belegte Ladefläche (2) projizierten Gitternetzes ermittelt wird.

17. Verfahren nach einem der vorhergehenden Ansprüche 6 bis 16, **dadurch gekennzeichnet, dass**
unter Verwendung einer Trägheitsmessungseinheit (IMU, Inertial Measurement Unit) eine horizontale Messlinie (17) generiert wird und wobei eine Orthorektifizierung und/oder Entzerrung des erzeugten Bildes (11) unter Verwendung der detektierten Seitenwände (5) des Transporters (1) und der horizontalen Messlinie (17) durchgeführt wird und der Palettendetektionsalgorithmus auf das orthorektifizierte und/oder verzerrungsfreie Bild (11) angewendet wird.

18. Verfahren nach einem der vorhergehenden Ansprüche, **dadurch gekennzeichnet, dass**
der Wert derjenigen ermittelten Ladefläche (2), welche nicht durch Einheitspaletten (4) belegt ist, und die Anzahl der potentiell aufnehmbaren Einheitspaletten an ein Transportmanagementsystem (19) durch ein Kommunikationsmittel übermittelt wird.

19. Verfahren nach einem der vorhergehenden Ansprüche, **dadurch gekennzeichnet, dass**
zusätzlich das Gewicht der geladenen palettierten Güter ermittelt wird und zur Ermittlung des Beladungszustandes miteinbezogen wird.

20. System aufweisend eine Kamera zum Erzeugen eines manuellen Bildes (11) von einem, mit auf Einheitspaletten (4) angeordneten Gütern (3) beladenen Laderaum (9) eines Transporters (1), wobei der Laderaum (9) von einer Ladefläche (2), einer Vorderwand (21), einer Rückwand, Seitenwänden (5) sowie einem Dach (6) umgrenzt ist, wobei zumindest die Rückwand und/oder eine Seitenwand (5) zumindest teilweise als Türe öffenbar ausgebildet ist oder in der Rückwand und/oder in der Seitenwand (5) eine Türe angeordnet ist, zur Beladung der Ladefläche (2) mit den palettierten Gütern (3),
wobei eine Auswerteeinheit vorgesehen ist, zur Auswertung eines manuellen Bildes (11) des beladenen Laderaums (9), welches mit auf Einheitspaletten (4) geladene Gütern (3) zeigt, so dass die geöffnete Türe und/oder ein Teil der Seitenwände zumindest teilweise in dem erzeugten Bild (11) erfasst sind, wobei die Auswerteeinheit zur Detektion von ersten Einheitspaletten (4) aus dem erzeugten Bild (11) und Bestimmung der nicht belegten Ladefläche (2) anhand der detektierten ersten Einheitspaletten (4) eingerichtet ist und wobei die Auswerteeinheit ferner zur Bestimmung der nicht belegten Ladefläche (2) unter Verwendung der Annahme, dass die ersten Einheitspaletten (4) eine Einheitsgröße und Einheitsform aufweisen, eingerichtet ist.

21. Transportmanagementsystem (19) zur Steuerung eines oder mehrerer Transporter (1) unter Verwendung eines Verfahrens nach einem der vorhergehenden Ansprüche 1 bis 19.
